# EUROPEAN PATENT APPLICATION

(11) **EP 3 208 250 A1**
(43) Date of publication of application: **23.08.2017**
(21) Application number: 16290036.9
(22) Date of filing: 18.02.2016
(51) Int. Cl.: C04B 28/04, C09K 8/487

(54) **COMPOSITIONS AND METHODS FOR REDUCING FLUID LOSS IN WELL CEMENTING SLURRIES**

(71) Applicant: Services Pétroliers Schlumberger, 75007 Paris (FR); Schlumberger Technology B.V., 2514 JG The Hague (NL)
(72) Inventor: Michaux, Michel, 92140 Clamart (FR); Caritey, Jean-Philippe, 92140 Clamart (FR); Beaudy, Pierre, 92140 Clamart (FR)
(74) Representative: Leonori, Céline

(57) **Abstract**

A well cementing composition comprises an aqueous fluid, portland cement, styrene-butadiene latex and styrene sulfonate-maleic acid copolymer. The styrene sulfonate-maleic acid copolymer has a molecular weight between 5,000 g/mol and 25,000 g/mol. The composition may be placed in a subterranean well during a primary cementing or a remedial cementing operation.

## Description

### BACKGROUND

The statements in this section merely provide background information related to the present disclosure and may not constitute prior art.

The present disclosure broadly relates to compositions and methods for reducing the fluid loss of cement slurries.

During the construction of subterranean wells, it is common, during and after drilling, to place a tubular body in the wellbore. The tubular body may comprise drillpipe, casing, liner, coiled tubing or combinations thereof. The purpose of the tubular body is to act as a conduit through which desirable fluids from the well may travel and be collected, or fluids may be injected into the well. The tubular body is normally secured in the well by a cement sheath.

The cement sheath is placed in the annular region between the outside of the tubular body and the subterranean borehole wall by pumping the cement slurry down the interior of the tubular body, which in turn exits the bottom of the tubular body and travels up into the annulus. The cement slurry may also be placed by the "reverse cementing" method, whereby the slurry is pumped directly down into the annular space.

The cement sheath provides mechanical support and hydraulic isolation between the zones or layers that the well penetrates. The latter function is prevents hydraulic communication between zones that may result in contamination. For example, the cement sheath blocks fluids from oil or gas zones from entering the water table and contacting drinking water. In addition, to optimize a well's production efficiency, it may be desirable to isolate, for example, a gas-producing zone from an oil-producing zone. The cement sheath achieves hydraulic isolation because of its low permeability. In addition, intimate bonding between the cement sheath and both the tubular body and borehole prevents leaks.

When cement slurries are pumped against a porous medium such as a subterranean rock formation, the pressure differential between the slurry and the formation may lead to filtration. The aqueous phase of the cement slurry escapes into the formation, leaving the solids behind. Depending on the relative importance of erosional forces during fluid flow and sticking forces due to filtration, the solids can form an external filter cake along the formation wall or remain suspended in the cement slurry. A small amount of solids may also enter the larger pores in the formation, creating an internal filter cake.

During primary cementing, the cement slurry flows along the formation wall, and a dynamic tangential filtration process takes place. In most cases, drilling mud, chemical washes and spacers have encountered the formation before the cement slurry; thus, some filtration into the formation has already occurred. Later, when pumping ceases, a static filtration period takes place. During remedial cementing, the filtration is largely static.

Insufficient fluid-loss control may be responsible for primary cementing failures owing to excessive increases in slurry viscosity during placement, annular bridging, or accelerated pressure declines during the waiting-on-cement (WOC) period. In addition, invasion of cement filtrate into the formation can cause damage and reduce production.

The American Petroleum Institute (API) fluid-loss value of a neat cement slurry generally exceeds 1,500 mL/30 min. However, in some circumstances, an API fluid-loss value lower than 50 mL/30 min may be appropriate to maintain adequate slurry performance. To accomplish such a fluid-loss reduction, materials known as fluid-loss control agents may be included in the slurry design.

Two principal classes of fluid-loss additives exist: finely divided particulate materials and water-soluble polymers. Particulate additives include clays such as bentonite, latexes and microgels. Water-soluble polymers include cellulose derivatives such as hydroxyethylcellulose (HEC) and carboxymethylhydroxyethylcellulose (CMHEC), galactomannans, polyvinylpyrrolidone, polyacrylamide, polyethylene imine (PEI) and polymers based on 2-acrylamido-2-methyl propane sulfonic acid (ATBS). Without wishing to be held to any particular theory, particulate fluid-loss additives are generally thought to become lodged in formation-rock or filter-cake pores, thereby lowering the formation-rock or filter-cake permeability and hindering escape of the aqueous phase from the slurry. Water soluble polymers are generally thought to viscosify the aqueous phase to hinder filtration, form impermeable membranes that act as fluid-flow barriers, form an adsorbed polymer layer around cement particles, or a combination thereof.

A thorough discussion of fluid-loss and fluid-loss additives may be found in the following publications. Daccord G, Craster B, Ladva H, Jones TGJ and Manescu G: "Cement-Formation Interactions," in Nelson EB and Guillot D (eds.): Well Cementing-2nd Edition, Houston: Schlumberger (2006): 202-219. Nelson EB, Michaux M and Drochon, B: "Cement Additives and Mechanisms of Action," in Nelson EB and Guillot D (eds.): Well Cementing-2nd Edition, Houston: Schlumberger (2006): 49-91.

### SUMMARY

In an aspect, embodiments relate to well cementing compositions. The compositions comprise an aqueous fluid, portland cement, styrene-butadiene latex and styrene sulfonate-maleic acid copolymer. The styrene sulfonate-maleic acid copolymer has a molecular weight between 5,000 g/mol and 25,000 g/mol.

In a further aspect, embodiments relate to methods for cementing a subterranean well having a borehole. A composition is provided that comprises an aqueous fluid, portland cement, styrene-butadiene latex and styrene sulfonate-maleic acid copolymer. The styrene sulfonate-maleic acid copolymer has a molecular weight between 5,000 g/mol and 25,000 g/mol. The composition is then placed in the well.

In yet a further aspect, embodiments relate to methods for providing fluid-loss control in a cement composition. A composition is provided that comprises an aqueous fluid, portland cement, styrene-butadiene latex and styrene sulfonate-maleic acid copolymer. The styrene sulfonate-maleic acid copolymer has a molecular weight between 5,000 g/mol and 25,000 g/mol. The composition is exposed under pressure to a porous medium.

This summary is provided to introduce a selection of concepts that are further described below in the detailed description. This summary is not intended to identify key or essential features of the claimed subject matter, nor is it intended to be used as an aid in limiting the scope of the claimed subject matter.

### DETAILED DESCRIPTION

In the following description, numerous details are set forth to provide an understanding of the present disclosure. However, it may be understood by those skilled in the art that the methods of the present disclosure may be practiced without these details and that numerous variations or modifications from the described embodiments may be possible.

At the outset, it should be noted that in the development of any such actual embodiment, numerous implementation-specific decisions are made to achieve the developer's specific goals, such as compliance with system related and business related constraints, which will vary from one implementation to another. Moreover, it will be appreciated that such a development effort might be complex and time consuming but would nevertheless be a routine undertaking for those of ordinary skill in the art having the benefit of this disclosure. In addition, the composition used/disclosed herein can also comprise some components other than those cited. In the summary of the disclosure and this detailed description, each numerical value should be read once as modified by the term "about" (unless already expressly so modified), and then read again as not so modified unless otherwise indicated in context. The term about should be understood as any amount or range within 10% of the recited amount or range (for example, a range from about 1 to about 10 encompasses a range from 0.9 to 11). Also, in the summary and this detailed description, it should be understood that a concentration range listed or described as being useful, suitable, or the like, is intended that any concentration within the range, including the end points, is to be considered as having been stated. For example, "a range of from 1 to 10" is to be read as indicating each possible number along the continuum between about 1 and about 10. Furthermore, one or more of the data points in the present examples may be combined together, or may be combined with one of the data points in the specification to create a range, and thus include each possible value or number within this range. Thus, even if specific data points within the range, or even no data points within the range, are explicitly identified or refer to a few specific, it is to be understood that inventors appreciate and understand that any data points within the range are to be considered to have been specified, and that inventors possessed knowledge of the entire range and the points within the range.

In this disclosure, Applicant presents improved compositions and methods for providing fluid-loss control in well cements.

More specifically, described herein is a composition that includes an aqueous fluid, portland cement, styrene-butadiene latex and styrene sulfonate-maleic acid copolymer.

Ordinary portland cement (OPC) is envisioned for use in the disclosed cement formulations. OPC includes cements manufactured for civil engineering and construction purposes, as well as specially manufactured oil well cements that are recognized by the American Petroleum Institute. Such cements include Class A, Class C and Class G cements. More information concerning such cements may be found in the following publication. Nelson EB and Michaux M: "Chemistry and Characterization of Portland Cement," in Nelson EB and Guillot D (eds.): Well Cementing-2nd Edition, Houston: Schlumberger (2006) 23-48.

As discussed earlier, latexes fall into the particulate category of fluid-loss additives. They also have a film forming capability that may further contribute to their ability to provide fluid-loss control. In high-pressure, high-temperature (HPHT) wells, the bottomhole temperature may exceed 150°C. Preserving the ability of styrene-butadiene latex to provide fluid-loss control may be problematic. Applicant has determined that styrene sulfonate-maleic acid (SSMA) copolymer, effectively supports the ability of styrene-butadiene latex to provide fluid-loss control, and extends the temperature range at which adequate fluid loss control may be achieved to at least 200°C.

For each aspect, the aqueous fluid may be fresh water, produced water, connate water, sea water or brines.

For each aspect, the styrene-butadiene latex may be present at a concentration between 120 L/tonne of cement and 310 L/tonne of cement, or between 200 L/tonne of cement and 300 L/tonne of cement. The styrene-butadiene latex may also be used to prevent gas migration.

For each aspect, the styrene sulfonate-maleic acid copolymer (SSMA) may be present at a concentration between 0.4% by weight of cement (BWOC) and 1.0% BWOC, or between 0.6% BWOC and 0.8% BWOC. The molecular weight of the SSMA is between 5,000 g/mol and 25,000 g/mol, or between 10,000 g/mol and 20,000 g/mol, or between 10,000 g/mol and 15,000 g/mol. The styrene sulfonate-to-maleic acid molar ratio may be equal to 1.

For each aspect, the cement composition may further comprise crystalline silica at a concentration between 30% BWOC and 150% BWOC, or between 35% BWOC and 60% BWOC. The silica may be in the form of crystalline quartz, and the particle size may vary between 3 micrometers and 300 micrometers, or between 10 micrometers and 100 micrometers, or between 10 micrometers and 20 micrometers.

For each aspect, the cement composition may further comprise a retarder. The retarder may comprise a blend of an organophosphonate and a borate compound. The organophosphonate may be amino trimethylene phosphonic acid (ATP), 1-hydroxyethylidene-1,1,-disphosphonic acid (HEDP), ethylene diamine tetramethylene phosphonic acid (EDTMP), diethylene triamine pentamethylene phosphonic acid (DTPMP), polyamino phosphonic acid, or bis(hexamethylene triamine pentamethylene phosphonic acid) or combinations thereof. Salts of the phosphonic acid may also be suitable. The phosphonate compound may be EDTMP. The borate compound may be boric acid, tetraborate salts, pentaborate salts, borate esters or metaborate salts or combinations thereof. The borate salts may or may not include waters of hydration. The borate compound may be sodium pentaborate decahydrate. The retarder may be an aqueous solution of the phosphonate compound and the borate compound, present at a concentration between 50 L/tonne of cement and 180 L/tonne of cement, or between 90 L/tonne of cement and 140 L/tonne of cement. The retarder may be an aqueous solution of EDTMP and sodium pentaborate.

For each aspect, the cement composition may further comprise colloidal amorphous silica. Silica may be found in nature in crystalline form (e.g., quartz sand). Amorphous silica, on the other hand, is industrially manufactured in a variety of forms, including silica gels, precipitated silica, fumed silica and colloidal silica. A colloid is a stable dispersion of particles-particles that are sufficiently small that gravity does not cause them to settle, yet are too large to pass through a membrane that allows other molecules and ions to pass freely. The particle size may range from about 1 nm to 100 nm, or between 1 nm and 10 nm, or between 5 nm and 10 nm, and the specific surface area may be between 14 m²/g and 1,400 m²/g, or between 140 m²/g and 1,400 m²/g, or between 140 m²/g and 500 m²/g. Colloidal silica varies from other types of silica in several ways. The most noticeable difference is that it occurs in the form of a liquid suspension as opposed to a powder. Colloidal silica is made of dense, amorphous SiO₂ particles. The particles are randomly distributed SiO₄ tetrahedra. In this application, this material is referred to as colloidal amorphous silica (CAS). The CAS may be present in the composition at a concentration between 5 L/tonne of cement and 35 L/tonne of cement, or between 10 L/tonne of cement and 27 L/tonne of cement.

For each aspect, the cement composition may have a density between 1,800 kg/m³ and 2,600 kg/m³, or between 1,900 kg/m³ and 2,400 kg/m³.

For each aspect, the cement composition may further comprise polystyrene sulfonate at a concentration between 0.1% BWOC and 1.5% BWOC, or between 0.2% BWOC and 1.0% BWOC. The molecular weight of the polystyrene sulfonate may be between 75,000 g/mol and 1,500,000 g/mol, or between 250,000 g/mol and 1,000,000 g/mol.

For each aspect, the cement composition may further comprise extenders, weighting agents, lost-circulation materials, dispersants, surfactants and gas generating agents.

For each aspect, the cement composition may be exposed to temperatures between about 150°C and 300°C, or between 160°C and 200°C. It is well known in the art that achieving adequate fluid loss control can be difficult in slurries containing styrene-butadiene latex at temperatures exceeding 150°C.

For the aspect pertaining to cementing a well, the composition may be placed in the well during a primary cementing or a remedial cementing operation.

For the aspect pertaining to providing fluid-loss control, the porous medium may be a natural formation rock such as sandstones, carbonates, shales and evaporites. The porous medium may also be a synthetic material such as wire screens and fritted glass.

The foregoing is further illustrated by reference to the following examples, which are presented for purposes of illustration and are not intended to limit the scope of the present disclosure.

### EXAMPLES

Cement slurries were prepared and tested according to the recommended procedure published by the American Petroleum Institute (API RP10B). The API procedure specifies operating the mixer at 4000 RPM while the solids are added to the container, then increasing the speed to 12,000 RPM for 35 seconds. The mixing device was a Model 3260 Constant Speed Mixer. The cement used for each of the examples was Dyckerhoff Class G cement, and the slurries were prepared with tap water. The density of each of the slurries was 1900 kg/m³ (15.8 lbm/gal).

Fluid-loss rates were measured by using a Model 7120 Stirred Fluid Loss Tester, manufactured by Chandler Engineering, Broken Arrow, OK. The time to reach the test temperature was 90 minutes, and the stirring of the slurry continued for 30 minutes at the test temperature before opening the valve and beginning to collect filtrate. The differential pressure was 6.89 MPa (1000 psi). The volume of filtrate collected after 30 minutes was multiplied by two to calculate the API fluid loss value.

Thickening times of the cement slurries were measured using Model 8040 HPHT Consistometer, manufactured by Chandler Engineering, Broken Arrow, OK. The time to reach the test temperature was 90 minutes. The thickening time is defined as the time at which the slurry consistency reaches 100 Bearden units (Bc).

Certain additives were present in each of the cement slurries presented in the Examples. Crystalline silica was quartz with a median particle size of 20 micrometers. The styrene-butadiene latex was a suspension containing 45% solids. The organophosphonate-pentaborate retarder was an aqueous solution of EDTMP and sodium pentaborate. Polystyrene sulfonate was VERSA-TL 502, available from Akzo-Nobel. The CAS had a median particle size of 8 nm, a specific surface area of 300 m²/g and the aqueous suspension contained 30 wt% silica.

### EXAMPLE 1

The base cement slurry was composed of Class G cement, 35% crystalline silica by weight of cement (BWOC), 4.44 L/tonne silicone antifoam agent, 249 L/tonne (of cement) styrene-butadiene latex, 88.8 L/tonne organophosphonate-pentaborate retarder, 0.5% BWOC polystyrene sulfonate, and 26.6 L/tonne CAS. Two slurries were tested. In one slurry 0.8% BWOC of a dispersant containing sodium lignosulfonate, sodium gluconate and tartaric acid (LGT) was added to the base slurry. In the other slurry, 0.8% BWOC styrene sulfonate-maleic acid copolymer (NARLEX D72, available from Akzo Nobel) was added to the base slurry instead of the LGT. The fluid-loss was measured at 163°C (Tests 1A and 1B), and the thickening time was measured at 163°C and 103 MPa (Tests 1C and 1D). The results are presented in Table 1.

**Table 1. Fluid loss at 163°C; thickening time at 163°C and 103 MPa.**

| Test | Additive | Test Type | Result |
|---|---|---|---|
| 1A | 0.8% BWOC LGT | API fluid loss at 163°C (mL/30 min) | 45 |
| 1B | 0.8% BWOC NARLEX D72 | API fluid loss at 163°C (mL/30 min) | 17 |
| 1C | 0.8% BWOC LGT | Thickening time at 163°C and 103 MPa (hr:min) | 7:41 |
| 1D | 0.8% BWOC NARLEX D72 | Thickening time at 163°C and 103 MPa (hr:min) | 35:23 |

The fluid-loss rate was substantially lower when the NARLEX D72 was present. The thickening time of the NARLEX 72 was also much longer, confirming that it is also an effective cement retarder.

### EXAMPLE 2

The base cement slurry was composed of Class G cement, 35% crystalline silica by weight of cement (BWOC), 4.44 L/tonne silicone antifoam agent, 266 L/tonne (of cement) styrene butadiene latex, 133 L/tonne organophosphonate-pentaborate retarder, 0.3% BWOC polystyrene sulfonate and 17.8 L/tonne CAS. Four slurries were tested. In one slurry, 0.8% BWOC of a dispersant containing sodium lignosulfonate, sodium gluconate and tartaric acid (LGT) was added to the base slurry. In the other three slurres, NARLEX D72 styrene sulfonate-maleic acid copolymer was added to the base slurry (instead of the LGT) at three concentrations: 0.4% BWOC, 0.6% BWOC and 0.8% BWOC.

The fluid-loss was measured at 177°C, and the thickening time was measured at 177°C and 103 MPa. The results are presented in Table 2.

**Table 2. Fluid loss at 177°C; thickening time at 177°C and 103 MPa.**

| Test | Additive | Test Type | Result |
|---|---|---|---|
| 2A | 0.8% BWOC LGT | API fluid loss at 177°C (mL/30 min) | 49 |
| 2B | 0.8% BWOC LGT | Thickening time at 177°C and 103 MPa (hr:min) | 9:07 |
| 2C | 0.8% BWOC NARLEX D72 | API fluid loss at 177°C (mL/30 min) | 14 |
| 2D | 0.8% BWOC NARLEX D72 | Thickening time at 177°C and 103 MPa (hr:min) | 16:30 |
| 2E | 0.6% BWOC NARLEX D 72 | API fluid loss at 177°C (mL/30 min) | 23 |
| 2F | 0.4% BWOC NARLEX D72 | API fluid loss at 177°C (mL/30 min) | 55 |

At 177°C the NARLEX D72 continued to promote superior fluid-loss control and act as a cement retarder (Tests 2C and 2D) compared to the LGT (Tests 2A and 2B). A low fluid loss was maintained when the NARLEX D72 concentration was reduced to 0.6% BWOC (Test 2D) Reducing the NARLEX D72 concentration to 0.4% BWOC resulted in a fluid-loss rate comparable to that achieved by the LGT additive at 0.8% BWOC (Test 2F).

### EXAMPLE 3

The cement slurry was composed of Class G cement, 35% crystalline silica by weight of cement (BWOC), 4.44 L/tonne silicone antifoam agent, 302 L/tonne (of cement) styrene butadiene latex, 178 L/tonne organophosphonate-pentaborate retarder, 0.3% BWOC polystyrene sulfonate and 17.8 L/tonne CAS. Two slurries were tested. In one slurry, 0.8% BWOC of a dispersant containing sodium lignosulfonate, sodium gluconate and tartaric acid (LGT) was added to the base slurry. In the other slurry 0.8% BWOC styrene sulfonate-maleic acid copolymer was added to the base slurry instead of the LGT.

The fluid loss was measured at 191°C (Tests 3A and 3B) and the thickening time was measured at 191°C and 124 MPa (Tests 3C and 3D). The results are presented in Table 3.

**Table 3. Fluid loss at 191°C; thickening time at 191°C and 124 MPa.**

| Test | Additive | Test Type | Result |
|---|---|---|---|
| 3A | 0.8% BWOC LGT | API fluid loss at 163°C (mL/30 min) | 55 |
| 3B | 0.8% BWOC NARLEX D72 | API fluid loss at 163°C (mL/30 min) | 14; 16 (test was repeated) |
| 3C | 0.8% BWOC LGT | Thickening time at 163°C and 103 MPa (hr:min) | 4:48 |
| 3D | 0.8% BWOC NARLEX D72 | Thickening time at 163°C and 103 MPa (hr:min) | 5:50 |

Compared to the LGT (Test 3A), the NARLEX D72 continued to promote superior fluid-loss control at 191°C (Test 3B). The thickening time difference (Tests 3C and 3D) was not as prominent because slurries containing styrene butadiene latex can be very difficult to retard at such high temperatures.

Although only a few example embodiments have been described in detail above, those skilled in the art will readily appreciate that many modifications are possible in the example embodiments without materially departing from this disclosure. Accordingly, all such modifications are intended to be included within the scope of this disclosure as defined in the following claims.

## Claims

1. A well cementing composition, comprising:
(i) an aqueous fluid;
(ii) portland cement;
(iii) styrene-butadiene latex; and
(iv) styrene sulfonate-maleic acid copolymer
wherein, the styrene sulfonate-maleic acid copolymer has a molecular weight between 5,000 g/mol and 25,000 g/mol.

2. The composition of claim 1, wherein the styrene-butadiene latex is present at a concentration between 120 L/tonne of cement and 310 L/tonne of cement.

3. The composition of claim 1 or 2, wherein the styrene sulfonate-maleic acid copolymer is present at a concentration between 0.4% by weight of cement and 1.0% by weight of cement.

4. The composition of any one of claims 1-3, further comprising crystalline silica at a concentration between 30% by weight of cement and 150% by weight of cement.

5. The composition of any one of claims 1-4, further comprising a retarder comprising an aqueous solution of an organophosphonate and a borate compound, the retarder being present at a concentration between 50 L/tonne of cement and 180 L/tonne of cement.

6. The composition of any one of claims 1-5, further comprising colloidal amorphous silica at a concentration between 5 L/tonne of cement and 35 L/tonne of cement.

7. The composition of any one of claims 1-6, further comprising polystyrene sulfonate at a concentration between 0.1% by weight of cement and 1.5% by weight of cement.

8. A method for cementing a subterranean well having a borehole, comprising:
(i) providing a well cementing composition comprising an aqueous fluid, portland cement, styrene-butadiene latex and styrene sulfonate-maleic acid copolymer, wherein the styrene sulfonate-maleic acid copolymer has a molecular weight between 5,000 g/mol and 25,000 g/mol; and
(ii) placing the composition in the well.

9. The method of claim 8, wherein the styrene-butadiene latex is present at a concentration between 120 L/tonne of cement and 310 L/tonne of cement.

10. The method of claim 8 or 9, wherein the styrene sulfonate-maleic acid copolymer is present at a concentration between 0.4% by weight of cement and 1.0 % by weight of cement.

11. The method of any one of claims 8-10, wherein the composition further comprises crystalline silica at a concentration between 30% by weight of cement and 150% by weight of cement.

12. The method of any one of claims 8-11, wherein the composition further comprises a retarder comprising an aqueous solution of an organophosphonate and a borate compound, the retarder being present at a concentration between 50 L/tonne of cement and 180 L/tonne of cement.

13. The method of any one of claims 8-12, wherein the composition further comprises colloidal amorphous silica at a concentration between 5 L/tonne of cement and 35 L/tonne of cement.

14. The method of any one of claims 8-13 wherein the composition further comprises polystyrene sulfonate at a concentration between 0.1% by weight of cement and 1.5% by weight of cement.

15. The method of any one of claims 8-14, wherein the composition is placed during a primary cementing or a remedial cementing operation.
